# EUROPÄISCHE PATENTSCHRIFT

(11) **EP 1 310 469 B1**
(45) Veröffentlichungstag und Bekanntmachung des Hinweises auf die Patenterteilung: **28.09.2005**
(21) Anmeldenummer: 02024350.7
(22) Anmeldetag: 02.11.2002
(51) Int. Cl.: C04B 35/589, C04B 35/571, F16C 33/00, F16C 33/04

(54) **Verfahren zur Herstellung keramischer Lagerbauteile**
A process for production of ceramic bearing components
Procédé de fabrication d'un élément céramique de palier

(30) Priorität: 09.11.2001 DE 10154739
(43) Veröffentlichungstag der Anmeldung: 14.05.2003
(73) Patentinhaber: AB SKF, 41550 Göteborg (SE)
(72) Erfinder: Gegner, Jürgen, Dr., 90765 Fürth (DE)
(74) Vertreter: Gosdin, Michael

(56) Entgegenhaltungen:
- EP-A- 0 400 862
- EP-A- 0 412 428
- DE-A- 3 500 962
- US-A- 4 097 294

## Beschreibung

Die Erfindung betrifft ein Verfahren zur Herstellung keramischer Lagerbauteile.

Sowohl bei Gleitlager- als auch bei Wälzlageranwendungen ist es bereits bekannt, Lagerbauteile aus Keramik einzusetzen. Bei den Lagerbauteilen kann es sich beispielsweise um Wälzkörper oder um Lagerringe eines Wälzlagers oder eines Gleitlagers handeln.

Die EP 0 366 443 B1 offenbart keramische Lagerbausteine und ein Verfahren zur Herstellung derartiger Lagerbausteine. Die Lagerbausteine zeichnen sich dadurch aus, dass sie aus einem keramischen Material gebildet werden, das einen Gehalt an metallischen Bestandteilen in einer Menge von 3500 ppm oder weniger hat und das mehrere der Elemente Eisen, Nickel, Chrom und Wolfram enthält. Bei dem offenbarten Verfahren für die Herstellung eines keramischen Wälzlagerbausteins wird keramisches Rohmaterialpulver in eine Schlemmenform umgewandelt. Die Schlemme wird granuliert, zu einer gewünschten Gestalt geformt und gesintert. Während des Verfahrens werden metallische Bestandteile auf einen Restwert von 3500 ppm oder weniger reduziert.

Aus der EP 0 412 428 A1 sind ein keramischer Verbundkörper und ein Verfahren zur Herstellung eines derartigen Verbundkörpers in einem Pyrolyse- und Reaktionsprozess bekannt. Der Verbundkörper ist für Maschinenteile und Bauteile mit hoher mechanischer und thermischer Belastbarkeit insbesondere für den Einsatz im Motorenbau, in der Luft- und Raumfahrttechnik, in Wärmekraftmaschinen oder als Umformwerkzeug verwendbar.

Aus der US-PS 4,097,294 ist ein Verfahren zur Herstellung eines Keramikmaterials aus einem Polymer bekannt, bei dem das Polymer auf eine Temperatur zwischen 700 und 2000 °C aufgeheizt wird, wobei die Aufheizrate maximal 100 °C pro Stunde beträgt. Das Aufheizen wird in einer Inertgasatmosphäre durchgeführt.

Obwohl sich keramische Lagerbauteile bereits vielfach bewährt haben, weil sie auch unter extremen Bedingungen, wie beispielsweise hohe Temperaturen oder Schmiermittelverlust eine vergleichsweise hohe Lebensdauer aufweisen, beschränkt sich der Einsatz von keramischen Lagerbauteilen bislang hauptsächlich auf den Bereich von Spezialanwendungen. Dies ist darin begründet, dass die Herstellungskosten der Lagerbauteile bei Anwendung bekannter Herstellungsverfahren deutlich über den Herstellungskosten für vergleichbare Lagerbauteile aus Stahl liegen.

Der Erfindung liegt die Aufgabe zugrunde, ein Verfahren zur Herstellung keramischer Lagerbauteile anzugeben, das kostengünstig ist und dennoch die im Bereich der Lagertechnik bestehenden hohen Qualitätsanforderungen erfüllt.

Diese Aufgabe wird durch ein Verfahren mit den Verfahrensschritten gemäß Anspruch 1 erfüllt.

Beim erfindungsgemäßen Verfahren wird zur Herstellung keramischer Lagerbauteile ein Stoffgemisch, das eine metallorganische Verbindung als präkeramische Vorstufe und einen chemisch reaktiven Füllstoff enthält, einer Reaktionspyrolyse unterzogen, die unter Überdruck in einer chemisch reaktiven Gasatmosphäre durchgeführt wird. Vor der Reaktionspyrolyse wird eine erste, grob am Lagerbauteil orientierte Formgebung des Stoffgemisches, z. B. durch Pressen oder Gießen, und eine Härtung der im Stoffgemisch enthaltenen metallorganischen Verbindung durchgeführt. Bei der Reaktionspyrolyse findet eine thermische Umsetzung des Polymers in ein keramisches Material statt.

Diese Vorgehensweise hat den Vorteil, dass der Herstellungsprozess verglichen mit bei der Herstellung keramischer Lagerbauteile herkömmlicher Weise eingesetzten Sinter- und Heißpressverfahren wesentlich schneller abläuft und einen wesentlich geringeren Energieeinsatz erfordert. Weiterhin sind die verwendeten Ausgangsstoffe vergleichsweise kostengünstig. Ein weiterer Vorteil besteht darin, dass es bei geeigneten Prozessbedingungen kaum zu einer Schwindung kommt. Durch die Gasatmosphäre werden weitere Reaktionspartner zur Verfügung gestellt, insbesondere mit dem Ziel der Herstellung von Keramikmaterial auf Nitridbasis, speziell Siliziumnitrid. Der Überdruck ist im Sinne einer möglichst effizient ablaufenden Reaktion vorteilhaft.

Die vor der Reaktionspyrolyse durchgeführt Stabilisierung zum Grünbauteil kann mit oder ohne Gewichtsverlust erfolgen und insbesondere unter Druck und durch Wärmezufuhr bei einer Temperatur von etwa 100 °C bis 300 °C durchgeführt werden. Alternativ dazu oder ergänzend kann die Härtung auch durch Strahlungseinwirkung vollzogen sowie durch Zusätze gefördert werden. Im Rahmen der Härtung kann aus dem Stoffgemisch ein formstabiles Halbzeug hergestellt werden, aus dem vor Durchführung der Reaktionspyrolyse durch mechanische Bearbeitung die Lagerbauteile in ihren Grobabmessungen gefertigt werden. Dies hat den Vorteil, dass die zur Herstellung der Lagerbauteile erforderliche mechanische Bearbeitung größtenteils mit konventionellen industrieüblichen Verfahren, z. B. spanabhebend mit geringem Werkzeugverschleiß, an dem relativ weichen Grünbauteil stattfindet und nicht an dem harten, spröden Keramikprodukt. Dies erleichtert die Bearbeitung wesentlich, so dass eine effiziente und kostengünstige Fertigung möglich ist.

Das Stoffgemisch kann eine siliziumorganische Verbindung als präkeramische Vorstufe enthalten, wobei sich Polysiloxane u. a. wegen der an Luft durchführbaren Vorverarbeitung, die nicht durch eine Feuchtigkeitsempfindlichkeit beeinträchtigt wird, und ihrer Hydrolysestabilität besonders gut eignen und dank entsprechender Verfügbarkeit vergleichsweise kostengünstig erhältlich sind.

Als chemisch reaktiver Füllstoff kann ein Metallsilizid, insbesondere ein Eisensilizid eingesetzt werden. Die Verwendung von Eisensilizid hat wiederum den Vorteil, dass dieses Material sehr kostengünstig verfügbar ist. Hier ist beispielsweise an den Einsatz geeigneter industrieller Rückstände (z. B. Stahlindustrie) zu denken, gegebenenfalls nach entsprechender Aufbereitung. Der chemisch reaktive Füllstoff kann in Pulverform mit einer Korngröße in der Größenordnung von 1 µm verarbeitet werden.

Darüber hinaus kann das Stoffgemisch wenigstens einen weiteren chemisch reaktiven Füllstoff und/oder wenigstens einen Inertfüllstoff enthalten. Dadurch lassen sich u. a. das Schwindungsverhalten und die mechanischen Eigenschaften der polymerabgeleiteten Keramik weiter optimieren.

Als Gasatmosphäre eignet sich insbesondere eine Stickstoffatmosphäre.

Die Reaktionspyrolyse kann, insbesondere um dabei Temperaturfenster offener Porosität hinsichtlich der Reaktionsfähigkeit mit reaktivem Atmosphärengas auszunützen, in einem mehrstufig temperaturgesteuerten Prozess erfolgen. Zwischenschritte können etwa im Bereich von 400 °C bis 1000 °C mit Haltezeiten in der Großenordnung 1 Stunde gewählt werden. Die Endtemperatur der Pyrolyse, die typischerweise über einige Stunden eingehalten wird, liegt zwischen 1000 °C und 1700 °C, bevorzugt zwischen 1200 °C und 1500 °C. Dies hat den Vorteil, dass ein qualitativ besonders hochwertiges, beispielsweise praktisch restpolymerfreies Keramikmaterial erzeugt wird. Es liegt in Form eines mikroskopisch strukturierten keramischen Werkstoffes, gegebenenfalls mit geringem metallischem Anteil vor, im Falle der Verwendung einer geeigneten siliziumorganischen Vorstufe mit Metallsilizid als chemisch reaktivem Füllstoff und Stickstoffatmosphäre bestehend aus überwiegend Siliziumnitrid und Carbid. Je nach Wahl der Reaktionspartner und Prozessbedingungen kann sauerstoffhaltiges oder sauerstofffreies keramisches Material hergestellt werden bzw. ein geringer Anteil an Restpolymer im Verbundwerkstoff erhalten bleiben.

Die Bestandteile des Stoffgemisches können so aufeinander abgestimmt werden, dass die Lagerbauteile bei der Durchführung der Reaktionspyrolyse keiner nennenswerten volumetrischen Schrumpfung ausgesetzt sind oder eine kontrollierte, an der abschließenden Feinbearbeitung orientierte, geringe Volumenänderung erfahren. Dies hat den Vorteil, dass das Grünbauteil nahezu bis auf Endmaß bearbeitet werden kann. Nach der Durchführung der Reaktionspyrolyse kann dann eine mechanische Feinbearbeitung der Lagerbauteile erfolgen. Dabei ist aber nur noch ein relativ geringer Materialabtrag erforderlich.

Es ist somit möglich, mit dem erfindungsgemäßen Verfahren Lagerbauteile für Standardanwendungen sowie für Spezialanwendungen mit dann auch an die entsprechenden besonderen Forderungen angepassten und gegebenenfalls beispielsweise in bestimmten mechanischen Kennwerten gezielt modifizierten Materialeigenschaften herzustellen.

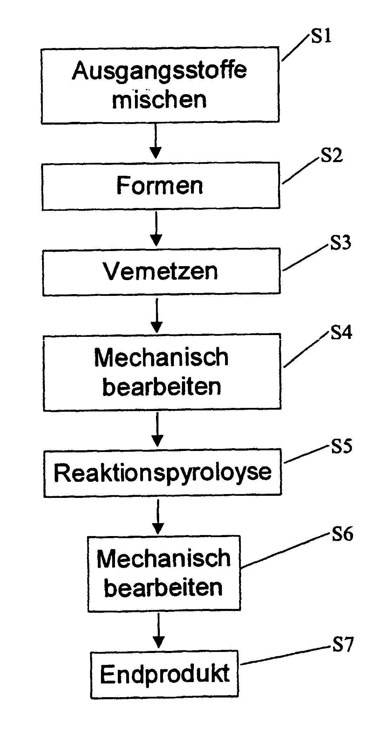

Die Erfindung wird nachstehend anhand des in der Zeichnung dargestellten Ausführungsbeispiels näher erläutert.

Die einzige Figur zeigt ein Flussdiagramm zur Veranschaulichung des erfindungsgemäßen Verfahrensablaufs.

Zur Fertigung von Lagerbauteilen nach dem erfindungsgemäßen Verfahren wird in einem ersten Schritt S1 ein Stoffgemisch hergestellt, das eine metallorganische Verbindung und einen chemisch reaktiven Füllstoff enthält. Als metallorganische Verbindung eignen sich insbesondere siliziumorganische Verbindungen, wobei in dem im folgenden beschriebenen bevorzugten Ausführungsbeispiel ein Polysiloxan zum Einsatz kommt. Für den chemisch reaktiven Füllstoff können insbesondere Metallsilizide zur Anwendung kommen. Beim bevorzugten Ausführungsbeispiel wird Eisensilizid mit einem Volumenanteil typischerweise im Bereich von 40 % verwendet. Eisensilizid kann im Rahmen des erfindungsgemäßen Verfahrens in Pulverform mit geeignet kleiner Korngröße im µm-Bereich, beispielsweise etwa 1 µm, verarbeitet werden. Eine kleine Korngröße ist für die Kontrolle und Minimierung der bei der pyrolytischen Polymer-Keramik-Umsetzung auftretenden, mit der Dichtezunahme verbundenen Schrumpfung wesentlich. Polysiloxan liegt je nach Zusammensetzung in flüssiger bis dickflüssiger oder gar pastöser Form vor. Die Anmischung des Stoffgemisches kann etwa durch Kneten, Rühren, Intensivmischen o. ä. erfolgen.

In einem auf Schritt S1 folgenden Schritt S2 wird das Stoffgemisch in eine Form eingefüllt, die die Konturen des Grünbauteils vorgibt. Wenn beispielsweise rollenförmige Wälzkörper hergestellt werden sollen, so eignet sich eine Form, mit der ein Rundstab geformt werden kann. Die Form kann aber auch so ausgebildet sein, dass das Stoffgemisch zu einem Rohr geformt wird, aus dem Ringe für Wälzlager oder für Gleitlager hergestellt werden. Im Prinzip lassen sich alle gängigen Formen von Lagerbauteilen, wie beispielsweise Wälzkörpern oder Lagerringen bzw. von Halbzeugen zur Herstellung von Lagerbauteilen realisieren.

An Schritt S2 schließt sich ein Schritt S3 an. Im Schritt S3 wird das Stoffgemisch in der Form unter Druckeinwirkung bei einer Temperatur von ca. 100 °C bis 300 °C zu einem Grünbauteil vernetzt. Alternativ dazu kann die Vernetzung prinzipiell auch durch eine Bestrahlung bei Raumtemperatur sowie mit Hilfe von Zusätzen vollzogen werden. Die Bestrahlung kann auch ergänzend zur thermisch induzierten Vernetzung eingesetzt werden. In diesem Fall findet die Bestrahlung oberhalb Raumtemperatur statt.

Das Grünbauteil ist formstabil, aber noch vergleichsweise weich, so dass er sich leicht mechanisch bearbeiten lässt. Die mechanische Bearbeitung findet in einem Schritt S4 statt, der auf Schritt S3 folgt. Beispielsweise durch eine spanende Bearbeitung können aus dem Grünbauteil ein oder mehrere Wälzlagerbauteile hergestellt werden, wobei im Hinblick auf die gewünschten Endmaße nur ein geringer Zuschlag für eine abschließende Feinbearbeitung erforderlich ist. So können zur Herstellung von Zylinderrollen aus einem Rundstab einzelne Abschnitte abgestochen werden und durch Drehen und/oder Schleifen auf gewünschte Grobabmessungen der Zylinderrolle gebracht werden. Die Feinbearbeitung, mit der die Endmaße und die gewünschte Oberflächentopographie hergestellt werden, erfolgt zu einem späteren Zeitpunkt des Verfahrens.

Wenn die Grobbearbeitung des Grünbauteils abgeschlossen ist, wird das Grünbauteil in einem Schritt S5 einer Reaktionspyrolyse unterzogen, durch die das vernetzte Stoffgemisch des Grünbauteils in eine Keramik umgewandelt wird. Die Reaktionspyrolyse wird in einer Stickstoffatmosphäre durchgeführt, wobei ein Stickstoffüberdruck von bis zu 10 bar gewählt wird. Die Temperatur beträgt während der ab etwa 400 °C einsetzenden Reaktionspyrolyse nach einem Zwischenschritt bei ca. 500 °C mit etwa 1 Stunde Haltezeit typischerweise 1500 °C über beispielsweise 6 Stunden. Prinzipiell können auch niedrigere Temperaturen von beispielsweise 1000 °C gewählt werden. Dann ist aber damit zu rechnen, dass noch ein gewisser, mit sinkender Temperatur zunehmender Anteil an Restpolymer in dem derart herstellten Keramikmaterial vorhanden ist. Zur Herstellung einer qualitativ hochwertigen Keramik sind in der Regel Temperaturen zwischen 1200 °C und 1500 °C erforderlich. Es sind aber auch höhere Temperaturen bis ca. 1700 °C möglich, so dass insgesamt ein Temperaturbereich von ca. 1000 °C bis 1700 °C in Frage kommt. Unter den geschilderten Reaktionsbedingungen wird das vernetzte Gründbauteil zu einem keramischen Material auf der Basis von Siliziumnitrid umgewandelt und der enthaltene Sauerstoff weitgehend ausgetrieben. Das so hergestellte keramische Produkt weist eine mikroskopische Strukturierung und nur geringe Porosität, typischerweise in der Größenordnung weniger Prozent, auf, die zudem geschlossen und sehr fein verteilt ist. Neben dem Hauptanteil Siliziumnitrid enthält der erzeugte keramische Verbundwerkstoff vorwiegend Carbide sowie eine geringe Menge an Restsauerstoff, der insbesondere oxidisch gebunden ist, und an metallischen Komponenten.

Im Rahmen der Reaktionspyrolyse reagieren die Komponenten des Stoffgemisches bzw. die Zersetzungsfragmente der Polymermatrix sowohl untereinander als auch mit der umgebenden Stickstoffatmosphäre. Dadurch ist es möglich, die mit der Dichtezunahme und dem (Kohlen-) Wasserstoffentzug der Polymere des vernetzten Stoffgemisches verbundene Schrumpfung durch eine entsprechende Volumenzunahme insbesondere durch mit Expansion verbundene chemische Reaktionen des Füllstoffs zu kompensieren, so dass letztendlich das Gesamtvolumen nahezu unverändert bleibt. Wesentlich hierfür ist insbesondere ein hinreichend großes Verhältnis zwischen Oberfläche und Volumen des chemisch reaktiven Füllstoffpulvers, weshalb die verwendete Korngröße im Bereich 1 µm liegt. In diesem Zusammenhang können zur Optimierung des Verfahrens weitere chemisch reaktive Füllstoffe, wie beispielsweise Bor oder Silizium, und darüber hinaus auch chemisch inerte Füllstoffe, wie beispielsweise Siliziumcarbid oder Bornitrid, eingesetzt werden.

Zur Herstellung der endgültigen Form des Lagerbauteils schließt sich an Schritt S5 ein Schritt S6 an, in dem eine Feinbearbeitung des Keramikkörpers erfolgt, so dass in einem Schritt S7 das Endprodukt vorliegt. Bei der Feinbearbeitung kann es sich beispielsweise um einen Schleifprozess handeln, bei dem die Abmessungen des Lagerbauteils auf die gewünschten Endwerte gebracht werden und/oder die gewünschte Oberflächentopographie, insbesondere im Bereich der Wälz- bzw. Gleitflächen hergestellt wird.

## Patentansprüche

1. Verfahren zur Herstellung keramische Lagerbauteile,
**dadurch gekennzeichnet, dass**
- ein Stoffgemisch hergestellt wird, das eine metallorganische Verbindung als präkeramische Vorstufe und einen chemisch reaktiven Füllstoff enthält,
- eine grob am Lagerbauteil orientierte Formgebung des Stoffgemisches und eine Stabilisierung durch Aushärtung der metallorganischen Verbindung im Stoffgemisch durchgeführt wird und
- das Stoffgemisch einer Reaktionspyrolyse unterzogen wird, die unter Überdruck in einer chemisch reaktiven Gasatmosphäre durchgeführt wird.

2. Verfahren nach Anspruch 1, **dadurch gekennzeichnet, dass** die Aushärtung durch Wärmeeinwirkung bei einer Temperatur von etwa 100 °C bis 300 °C durchgeführt wird.

3. Verfahren nach einem der vorhergehenden Ansprüche, **dadurch gekennzeichnet, dass** die Aushärtung durch Strahlungseinwirkung vollzogen wird.

4. Verfahren nach einem der vorhergehenden Ansprüche, **dadurch gekennzeichnet, dass** die Aushärtung unter Druck durchgeführt wird.

5. Verfahren nach einem der vorhergehenden Ansprüche, **dadurch gekennzeichnet, dass** im Rahmen der Aushärtung aus dem Stoffgemisch ein formstabiles Halbzeug hergestellt wird, aus dem vor Durchführung der Reaktionspyrolyse durch mechanische Bearbeitung die Lagerbauteile in ihren Grobabmessungen gefertigt werden.

6. Verfahren nach einem der Ansprüche, **dadurch gekennzeichnet, dass** das Stoffgemisch eine siliziumorganische Verbindung als präkeramische Vorstufe enthält.

7. Verfahren nach Anspruch 6, **dadurch gekennzeichnet, dass** das Stoffgemisch ein Polysiloxan oder ein Silikon als präkeramische Vorstufe enthält.

8. Verfahren nach einem der vorhergehenden Ansprüche, **dadurch gekennzeichnet, dass** das Stoffgemisch ein Metallsilizid als chemisch reaktiven Füllstoff enthält.

9. Verfahren nach Anspruch 8, **dadurch gekennzeichnet, dass** das Stoffgemisch ein Eisensilizid als chemisch reaktiven Füllstoff enthält.

10. Verfahren nach einem der vorhergehenden Ansprüche, **dadurch gekennzeichnet, dass** der chemisch reaktive Füllstoff in Pulverform mit einer Korngröße in der Größenordnung 1 µm verarbeitet wird.

11. Verfahren nach einem der vorhergehenden Ansprüche, **dadurch gekennzeichnet, dass** das Stoffgemisch wenigstens einen weiteren chemisch reaktiven Füllstoff und/oder wenigstens einen Inertfüllstoff enthält.

12. Verfahren nach Anspruch 1, **dadurch gekennzeichnet, dass** die Reaktionspyrolyse in einer Stickstoffatmosphäre durchgeführt wird.

13. Verfahren nach einem der vorhergehenden Ansprüche, **dadurch gekennzeichnet, dass** die Reaktionspyrolyse bei einer Temperatur zwischen 1000 °C und 1700 °C, bevorzugt zwischen 1200 °C und 1500 °C, durchgeführt wird.

14. Verfahren nach einem der vorhergehenden Ansprüche, **dadurch gekennzeichnet, dass** im Rahmen der Reaktionspyrolyse vorab wenigstens eine Wärmebehandlung im Bereich von 400 °C bis 1000 °C durchgeführt wird.

15. Verfahren nach Anspruch 14, **dadurch gekennzeichnet, dass** die Wärmebehandlung mit einer Haltezeit in der Größenordnung 1 Stunde durchgeführt wird.

16. Verfahren nach einem der vorhergehenden Ansprüche, **dadurch gekennzeichnet, dass** die Bestandteile des Stoffgemisches so aufeinander abgestimmt werden, dass bei der Durchführung der Reaktionspyrolyse keine nennenswerten volumetrischen Schrumpfungen auftreten oder eine kontrollierte, an der Weiterbearbeitung des Lagerbauteils orientierte, geringe Volumenänderung erzielt wird.

17. Verfahren nach einem der vorhergehenden Ansprüche, **dadurch gekennzeichnet, dass** nach Durchführung der Reaktionspyrolyse eine mechanische Feinbearbeitung der Lagerbauteile erfolgt.

## Claims

1. A method of producing ceramic bearing components,
**characterised in that**
- a mixture of substances is prepared, which contains an organometallic compound as preceramic precursor and a chemically reactive filler,
- shaping of the mixture of substances coarsely oriented on the bearing component and stabilising by curing the organometallic compound in the mixture of substances are carried out, and
- the mixture of substances is subjected to a reaction pyrolysis which is carried out at overpressure in a chemically reactive gas atmosphere.

2. A method according to Claim 1, **characterised in that** the curing is carried by heat action at a temperature of approximately 100 °C to 300 °C.

3. A method according to either one of the preceding Claims, **characterised in that** the curing is carried out by the action of radiation.

4. A method according to any one of the preceding Claims, **characterised in that** the curing is carried out under pressure.

5. A method according to any one of the preceding Claims, **characterised in that** in the course of the curing a rigid semi-finished product is prepared from the mixture of substances, from which, before carrying out the reaction pyrolysis, by machining the bearing components are fabricated in their coarse dimensions.

6. A method according to any one of the preceding Claims, **characterised in that** the mixture of substances contains an organosilicon compound as the preceramic precursor.

7. A method according to Claim 6, **characterised in that** the mixture of substances contains a polysiloxane or a silicone as the preceramic precursor.

8. A method according to any one of the preceding Claims, **characterised in that** the mixture of substances contains a metal silicide as chemically reactive filler.

9. A method according to Claims 8, **characterised in that** the mixture of substances contains an iron silicide as chemically reactive filler.

10. A method according to any one of the preceding Claims, **characterised in that** the chemically reactive filler is processed in powdered form with a particle size of the order of magnitude of 1 µm.

11. A method according to any one of the preceding Claims, **characterised in that** the mixture of substances contains at least one other chemically reactive filler and/or at least one inert filler.

12. A method according to Claim 1, **characterised in that** the reaction pyrolysis is carried out in a nitrogen atmosphere.

13. A method according to any one of the preceding Claims, **characterised in that** the reaction pyrolysis is carried out at a temperature of between 1000 °C and 1700 °C, preferably between 1200 °C and 1500 °C.

14. A method according to any one of the preceding Claims, **characterised in that** in the course of the reaction pyrolysis firstly at least one heat treatment is carried out in the range of from 400 °C and 1000 °C.

15. A method according to Claim 14, **characterised in that** the heat treatment is carried out with a residence time of the order of magnitude of 1 hour.

16. A method according to any one of the preceding Claims, **characterised in that** the constituents of the mixture of substances are so matched to one another that, when the reaction pyrolysis is carried out, no appreciable volumetric shrinkage occurs or a controlled small change in volume take place which is orientated towards the further machining of the bearing component.

17. A method according to any one of the preceding Claims, **characterised in that**, after the reaction pyrolysis has been carried out, finish-machining of the bearing components takes place.

## Revendications

1. Procédé de fabrication d'éléments de palier céramiques, **caractérisé en ce que**
- on fabrique un mélange de matières qui contient un composé organométallique en tant que précurseur précéramique et une charge chimiquement réactive,
- on procède à un formage du mélange de matières en prenant pour modèle grossier l'élément de palier, et on réalise une stabilisation par durcissement du composé organométallique dans le mélange de matières, et
- on soumet le mélange de matières à une pyrolyse-réaction qui est effectuée en présence d'une surpression, dans une atmosphère gazeuse chimiquement réactive.

2. Procédé selon la revendication 1, **caractérisé en ce que** le durcissement est réalisé sous l'action de la chaleur, à une température comprise entre environ 100 °C et 300 °C.

3. Procédé selon une des revendications précédentes, **caractérisé en ce que** le durcissement est réalisé sous l'action d'un rayonnement.

4. Procédé selon une des revendications précédentes, **caractérisé en ce que** le durcissement est réalisé sous pression.

5. Procédé selon une des revendications précédentes, **caractérisé en ce que** dans le cadre du durcissement, on réalise à partir du mélange de matières un produit semi-fini de forme stable, à partir duquel on façonne par usinage mécanique les éléments de palier avec des dimensions grossières, avant de procéder à la pyrolyse-réaction.

6. Procédé selon une des revendications précédentes, **caractérisé en ce que** le mélange de matières contient un composé organo-silicique en tant que précurseur précéramique.

7. Procédé selon la revendication 6, **caractérisé en ce que** le mélange de matières contient un polysyloxane ou un silicone en tant que précurseur précéramique.

8. Procédé selon une des revendications précédentes, **caractérisé en ce que** le mélange de matières contient un siliciure de métal en tant que charge chimiquement réactive.

9. Procédé selon la revendication 8, **caractérisé en ce que** le mélange de matières contient un siliciure de fer en tant que charge chimiquement réactive.

10. Procédé selon une des revendications précédentes, **caractérisé en ce que** la charge chimiquement réactive est mise en oeuvre sous forme de poudre avec une grosseur de grain de l'ordre de 1 µm.

11. Procédé selon une des revendications précédentes, **caractérisé en ce que** le mélange de matières contient au moins une charge chimiquement réactive supplémentaire et/ou au moins une charge inerte.

12. Procédé selon la revendication 1, **caractérisé en ce que** la pyrolyse-réaction est réalisée dans une atmosphère d'azote.

13. Procédé selon une des revendications précédentes, **caractérisé en ce que** la pyrolyse-réaction est effectuée à une température comprise entre 1000 °C et 1700 °C, de préférence entre 1200 °C et 1500 °C.

14. Procédé selon une des revendications précédentes, **caractérisé en ce que** dans le cadre de la pyrolyse-réaction, au moins un traitement thermique est réalisé préalablement, dans la plage comprise entre 400 °C et 1000 °C.

15. Procédé selon la revendication 14, **caractérisé en ce que** la traitement thermique est opéré avec un temps de maintien de l'ordre de grandeur de 1 heure.

16. Procédé selon une des revendications précédentes, **caractérisé en ce que** les composants de mélange de matières sont adaptés les uns aux autres de manière telle que lors de la réalisation de la pyrolyse-réaction il n'y ait pas de retraits volumétriques sensibles, ou de manière à obtenir un faible changement de volume contrôlé, qui est fonction du traitement ultérieur de l'élément de palier.

17. Procédé selon une des revendications précédentes, **caractérisé en ce que** la réalisation de la pyrolyse-réaction est suivie d'un usinage mécanique fin des éléments de palier.
